# EUROPÄISCHE PATENTANMELDUNG

(11) **EP 2 743 836 A2**
(43) Veröffentlichungstag der Anmeldung: **18.06.2014**
(21) Anmeldenummer: 13005832.4
(22) Anmeldetag: 16.12.2013
(51) Int. Cl.: G06F 17/10

(54) **Verfahren zur Überwachung von Systemzuständen mit einer Vorrichtung sowie entsprechend ausgestaltete Vorrichtung**

(30) Priorität: 17.12.2012 DE 102012112351
(71) Anmelder: Bast, Daniel Berthold, 91077 Hetzles (DE)
(72) Erfinder: Bast, Daniel Berthold, 91077 Hetzles (DE)

(57) **Zusammenfassung**

Die Erfindung betrifft ein Verfahren zur Aufnahme von Systemzuständen (K) mit einer Vorrichtung (4), ein Verfahren zur Bestimmung mindestens eines Systemzustandes (K) mit einer Vorrichtung (4), entsprechende Vorrichtungen, sowie Computerprog-ammprodukte, die die Ausführung derartiger Verfahren ermöglichen. Dabei wird aus Zeitreihen von Eingangssignalen eines Systems eine Berechnungsvorschrift zur Bestimmung des Zustandes des Systems abgeleitet, sodass das System selbst überwacht und Änderungen des Zustandes des Systems zuverlässig angezeigt werden können. Kern der Erfindung ist es, Signale von Systemen in mehreren Schritten in einen Raum zu transformieren, der eine geordnete Auswahl geeigneter Merkmale für eine Überwachung dieses Systems erlaubt.

## Beschreibung

Die vorliegende Erfindung betrifft ein Verfahren zur Aufnahme von Systemzuständen mit einer Vorrichtung, ein Verfahren zur Bestimmung mindestens eines Systemzustandes mit einer Vorrichtung, entsprechende Vorrichtungen hierfür, sowie entsprechende Computerprogrammprodukte, die die Ausführung derartiger Verfahren ermöglichen.

Derartige Verfahren kommen häufig bei der Überwachung von Systemen zum Einsatz. Dabei besteht meist die Notwendigkeit, anhand von Signalen des zugrundeliegenden Systems auf den dazugehörigen Systemzustand zu schließen.

Aufgabe der Erfindung ist es, den Zustand eines Systems zu überwachen und eine zuverlässige Anzeige der Änderung des Zustandes des Systems zu ermöglichen.
Diese Aufgabe wird durch ein Verfahren nach Anspruch 1 gelöst. Diese Aufgabe wird ferner durch eine Vorrichtung nach Anspruch 7, ein Ccmputerprogrammprodukt nach Anspruch 11, sowie durch ein ccmputerlesbares Speichermedium nach Anspruch 12 gelöst. Vorteilhafte Ausgestaltungen der Erfindung sind in den jeweils rückbezogenen Unteransprüchen angegeben.

Nachstehend wird die erfindungsgemäße Lösung der Aufgabe in Bezug auf das beanspruchte Verfahren beschrieben. Dabei erwähnte Merkmale, Vorteile oder alternative Ausführungsformen sind ebenso auch auf die anderen beanspruchten Gegenstände zu übertragen und umgekehrt. Es können die gegenständlichen Ansprüche, die z.B. auf eine Vorrichtung gerichtet sind, auch mit den Merkmalen, die in Zusammenhang mit einem Verfahren beschrieben oder beansprucht sind, weitergebildet sein. Die entsprechenden funktionalen Merkmale des Verfahrens werden dabei durch entsprechende gegenständliche Module, z.B. durch Hardware-Module, ausgebildet.

Kern der Erfindung ist es, Signale von Systemen in mehreren Schritten in einen Raum zu transformieren, der eine geordnete Auswahl geeigneter Merkmale für eine Überwachung dieses Systems erlaubt. So werden diese Signale einer Auswertung zugänglich. Dabei kann diese Auswertung automatisch oder durch eine Person erfolgen. Es ist nun erstmals möglich, diese Schritte für eine Vielzahl komplexer Systeme allgemeingültig zu beschreiben und durch eine angepasste Auswahl von Merkmalen gleichzeitig Redundanzen zu vermeiden, eine Robustheit zu erreichen und überanpassung zu vermeiden.

Die Erfindung nutzt den bestimmten Einsatz von Signalen eines Systems, um geeignete Merkmale des signalproduzierenden Systems zu konstruieren und mithilfe abgeleiteter Funktionen ein Mustererkennungsverfahren zu trainieren und schließlich eine Berechnungsvorschrift zur Bestimmung eines Systemzustandes mittels einer Verarbeitungseinheit einer Vorrichtung zu erhalten.

Dabei wird ein Verfahren zur Aufnahme von Systemzuständen mit einer Vorrichtung bereitgestellt, das folgende Schritte umfasst:
a) Unterteilung von mindestens einer Zeitreihe von mindestens einem Eingangssignal in ein Zeitfenster einer Länge L mit einem Abstand H zum Ende der Zeitreihe, wobei das Eingangssignal über eine Eingangseinheit der Vorrichtung zugeführt wird,
b) Wiederholung des Schrittes a) für alle Längen und alle Abstände, die sich aus der jeweiligen Zeitspanne der Zeitreihe und aus vorgebbaren Abtastraten für die Längen und Abstände der Zeitfenster ergeben,
c) Filterung der nach Wiederholungsschritt b) erhaltenen Zeitfenster anhand mindestens eines Filterkriteriums mittels der Verarbeitungseinheit der Vorrichtung,
d) Berechnung mindestens eines charakteristischen Merkmals für die gefilterten Zeitfenster mittels der Verarbeitungseinheit der Vorrichtung, wobei für jedes gefilterte Zeitfenster das mindestens eine Merkmal berechnet wird,
e) Bestimmung mindestens eines Funktionswertes einer vorgebbaren ersten Funktion, die die Werte des mindestens einen charakteristischen Merkmals für gefilterte Zeitfenster verschiedener Längen und Abstände für das mindestens eine Eingangssignal zusammenfasst mittels der Verarbeitungseinheit der Vorrichtung,
f) Bestimmung mindestens eines Funktionswertes einer vorgebbaren zweiten Funktion für alle Zeitfenster aus Verfahrensschritt b), die aus dem mindestens einem Funktionswert der ersten Funktion eine Größe, die zwischen den Systemzuständen unterscheidet, bestimmt mittels der Verarbeitungseinheit der Vorrichtung,
g) Filterung des mindestens einen Funktionswertes der vorgebbaren zweiten Funktion anhand eines weiteren Filterkriteriums zur Bestimmung eines Satzes von Funktionswerten der vorgebbaren ersten Funktion mittels der Verarbeitungseinheit der Vorrichtung,
h) Training eines Mustererkennungverfahrens zum Erhalt einer Berechnungsvorschrift zur Bestimmung eines Systemzustandes mittels der Verarbeitungseinheit der Vorrichtung anhand des aus Schritt g) bestimmten Satzes von Funktionswerten der vorgebbaren ersten Funktion und den dazugehörigen Systemzuständen.

Dabei wird ferner ein Verfahren zur Bestimmung mindestens eines Systemzustandes mit einer Vorrichtung bereitgestellt, das folgende Schritte umfasst:
a) Unterteilung von mindestens einer Zeitreihe von mindestens einem Eingangssignal in ein Zeitfenster einer Länge L mit einem Abstand H zum Ende der Zeitreihe, wobei das Eingangssignal über eine Eingangseinheit der Vorrichtung zugeführt wird,
b) Filterung der Zeitfenster anhand mindestens eines Filterkriteriums mittels der Verarbeitungseinheit der Vorrichtung,
c) Berechnung mindestens eines charakteristischen Merkmals für die gefilterten Zeitfenster mittels der Verarbeitungseinheit der Vorrichtung, wobei für jedes gefilterte Zeitfenster das mindestens eine Merkmal berechnet wird,
d) Wiederholung der Schritte a) bis c) mittels der Verarbeitungseinheit der Vorrichtung, bis alle für die Berechnungsvorschrift nach Anspruch 5 notwendigen, sich aus dem verwendeten Mustererkennungsverfahren ergebenden, Eingangsgrößen bestimmt sind und
e) Bestimmung mindestens eines Systemzustandes mittels der Verarbeitungseinheit der Vorrichtung anhand der Berechnungsvorschrift zur Bestimmung eines Systemzustandes mittels eines Verfahrens zur Aufnahme von Systemzuständen wie bereits oben ausgeführt.

Das konkrete technische Problem besteht somit in der Überwachung von Systemzuständen von komplexen Systemen, deren messbare Signale auf unterschiedlichen Zeitskalen zu beobachten sind. Das technische Mittel findet sich in dem beanspruchten Verfahren bzw. in der beanspruchten Vorrichtung. Die technische Wirkung der erfindungsgemäßen Lösung besteht in einer zuverlässigen Bestimmung einer Änderung eines derartigen Systemzustandes.

Unter einem komplexen System ist beispielsweise ein Herz-Kreislauf-System, ein Sonnensystem oder ein Verkehrssystem zu verstehen. Unter einem Systemzustand ist beispielsweise ein Zustand eines Patienten, eine Aktivität der Sonne oder ein Stauaufkommen zu verstehen.

Die aufgeführten Systeme und Systemzustände sind grundsätzlich unterschiedlicher technischer Natur, die erfindungsgemäße Lösung erlaubt es aber, diese komplexen Systeme und Systemzustände mit einer Vorrichtung bzw. mit einem Verfahren zu beschreiben und zu charakterisieren. Die Gemeinsamkeit der technischen Systeme liegt darin, dass es sich um komplexe Systeme handelt und in der Beschreibung der messbaren Systemsignale auf deren unterschiedlichen Zeitskalen. Dazu muss weder Vorrichtung noch Verfahren modifiziert werden.

In einer bevorzugten Ausführungsform des Verfahrens gehen bei Lücken für fehlende Werte im Verfahrensschritt f), Mittelwerte oder nach einer anderen Berechnungsvorschrift berechnete Werte in die vorgebbare zweite Funktion ein.

Dadurch wird sichergestellt, dass das Verfahren stets ein Funktionswert für weitere Verfahrensschritte zur Verfügung steht und diese robuster sind. Ferner können durch eine geeignet gewählte Berechnungsvorschrift auch fehlende Funktionswerte derart durch Interpolation erzeugt werden, um weitere Verfahrensschritte möglichst unverfälscht durchführen zu können.

In einer weiteren Ausführungsform erfolgt die Filterung im Verfahrensschritt g) durch eine manuelle Benutzereingabe. Auf diese Weise können nur schwer maschinell erfassbare oder fehleranfällige Filterungen manuell realisiert werden.

In einem geeigneten Anwendungsfall fließen neben den Funktionswerten der vorgebbaren zweiten Funktion im Verfahrensschritt g) auch die Werte von L und H der zugrunde liegenden Daten in das weitere Filterkriterium mit ein.

In einem weiteren Anwendungsfall wird der in Verfahrensschritt h) der in Verfahrensschritt g) bestimmte Satz von Funktionswerten auf einer Zeitskala verschoben zum gleichen oder einem anderen Systemzustand gehörend verwendet.

Im Rahmen der vorliegenden Erfindung wird auch eine Vorrichtung zur Speicherung und Verarbeitung von Eingangssignalen eines signalproduzierenden Systems bereitgestellt. Dabei umfasst die Vorrichtung
- mindestens eine Eingangseinheit zur Zuführung mindestens eines Eingangssignals, umfassend eine Zeitreihe von Messwerten und/oder Messzeitpunkten des signalproduzierenden Systems, eine sich daraus ergebende Zeitspanne und einen dazugehörigen Systemzustand,
- eine Verarbeitungseinheit zur Verarbeitung des mindestens einen Eingangssignals und
- eine Ausgangseinheit zur Ausgabe und/oder zur Speicherung einer Berechnungsvorschrift zur Vorhersage des Systemzustandes des signalproduzierenden Systems.

Die Verarbeitungseinheit ist dabei zur Ausführung folgender Schritte ausgestaltet:
a) Unterteilung der mindestens einen Zeitreihe des mindestens einen Eingangssignals in ein Zeitfenster einer Länge L mit einem Abstand H zum Ende der Zeitreihe,
b) Wiederholung des Schrittes a) für alle Längen und alle Abstände, die sich aus der jeweiligen Zeitspanne der Zeitreihe und aus vorgebbaren Abtastraten für die Längen und Abstände der Zeitfenster ergeben,
c) Filterung der nach Wiederholungsschritt b) erhaltenen Zeitfenster anhand mindestens eines Filterkriteriums,
d) Berechnung mindestens eines charakteristischen Merkmals für die gefilterten Zeitfenster, wobei für jedes gefilterte Zeitfenster das mindestens eine Merkmal berechnet wird,
e) Bestimmung mindestens eines Funktionswertes einer vorgebbaren ersten Funktion, die die Werte des mindestens einen charakteristischen Merkmals für gefilterte Zeitfenster verschiedener Längen und Abstände für das mindestens eine Eingangssignal zusammenfasst,
f) Bestimmung mindestens eines Funktionswertes einer vorgebbaren zweiten Funktion für alle Zeitfenster aus Verfahrensschritt b), die aus dem mindestens einem Funktionswert der ersten Funktion eine Größe, die zwischen den Systemzuständen unterscheidet, bestimmt,
g) Filterung des mindestens einen Funktionswertes der vorgebbaren zweiten Funktion anhand eines weiteren Filterkriteriums zur Bestimmung eines Satzes von Funktionswerten der vorgebbaren ersten Funktion,
h) Training eines Mustererkennungverfahrens zum Erhalt einer Berechnungsvorschrift zur Bestimmung eines Systemzustandes anhand des aus Schritt g) bestimmten Satzes von Funktionswerten der vorgebbaren ersten Funktion und den dazugehörigen Systemzuständen.

Außerdem wird eine Vorrichtung zur Bestimmung mindestens eines Systemzustandes angegeben. Diese Vorrichtung umfasst
- mindestens eine Eingangseinheit zur Zuführung mindestens eines Eingangssignals, umfassend eine Zeitreihe von Messwerten und/oder Messzeitpunkten des signalproduzierenden Systems, eine sich daraus ergebende Zeitspanne,
- eine Verarbeitungseinheit zur Bestimmung des Systemzustandes und
- eine Ausgangseinheit zur Ausgabe und/oder zur Speicherung des Systemzustandes.

Die Verarbeitungseinheit ist dabei zur Ausführung folgender Schritte ausgestaltet:
a) Unterteilung der mindestens einen Zeitreihe des mindestens einen Eingangssignals in ein Zeitfenster einer Länge L mit einen Abstand H zum Ende der Zeitreihe,
b) Filterung der Zeitfenster anhand mindestens eines Filterkriteriums,
c) Berechnung mindestens eines charakteristischen Merkmals für die gefilterten Zeitfenster, wobei für jedes gefilterte Zeitfenster das mindestens eine Merkmal berechnet wird,
d) Wiederholung der Schritte a) bis c) bis alle für die Berechnungsvorschrift nach Anspruch 5 notwendigen, sich aus dem verwendeten Mustererkennungsverfahren ergebenden, Eingangsgrößen bestimmt sind und
e) Bestimmung mindestens eines Systemzustandes anhand der Berechnungsvorschrift zur Bestimmung eines Systemzustandes mittels der Vorrichtung zur Speicherung und Verarbeitung von Eingangssignalen eines signalproduzierenden Systems wie bereits oben ausgeführt.

Des Weiteren beschreibt die vorliegende Erfindung ein Computerprogrammprodukt, insbesondere ein Computerprogramm oder eine Software, welche man in einen Speicher einer programmierbaren Steuerung bzw. einer Recheneinheit einer Datenverarbeitungseinheit laden kann. Mit diesem Computerprogrammprodukt können alle oder verschiedene vorab beschriebene Ausführungsformen des erfindungsgemäßen Verfahrens ausgeführt werden, wenn das Computerprogrammprodukt in der Steuerung oder Steuereinrichtung der Datenverarbeitungseinheit läuft. Dabei benötigt das Computerprogrammprodukt eventuell Programmmittel, z.B. Bibliotheken und Hilfsfunktionen, um die entsprechenden Ausführungsformen des Verfahrens zu realisieren. Es soll mit dem auf das Computerprogrammprodukt gerichteten Anspruch insbesondere ein Computerprogramm oder eine Software unter Schutz gestellt werden, mit welcher eine der oben beschriebenen Ausführungsformen des erfindungsgemäßen Verfahrens realisiert werden kann bzw. welche diese Ausführungsform ausführt. Dabei kann es sich bei der Software um einen Quellcode (z.B. C++), der noch compiliert oder der nur interpretiert werden muss, oder um einen ausführbaren Code handeln, der zur Ausführung nur noch in die entsprechende Recheneinheit zu laden ist.

Schließlich betrifft die vorliegende Erfindung ein computerlesbares Speichermedium, z.B. eine DVD oder einen USB-Stick, auf welchem elektronisch lesbare Steuerinformationen, insbesondere Software gespeichert ist. Wenn diese Steuerinformationen von dem Datenträger gelesen und in eine Steuerung bzw. Recheneinheit einer Datenverarbeitungseinheit gespeichert werden, können alle erfindungsgemäßen Ausführungsformen des vorab beschriebenen Verfahrens durchgeführt werden.

Die Vorteile der erfindungsgemäßen Vorrichtung, des erfindungsgemäßen Computerprogrammprodukts und des erfindungsgemäßen computerlesbaren Speichermediums entsprechen im Wesentlichen den Vorteilen des erfindungsgemäßen Verfahrens, welche vorab ausgeführt sind, weshalb auf eine Wiederholung verzichtet wird.

Im Folgenden wird die Erfindung anhand der in den Figuren dargestellten Ausführungsbeispiele näher beschrieben und erläutert.

Es zeigen:
FIG 1 eine schematische Darstellung einer erfindungsgemäßen Vorrichtung,
FIG 2 eine schematische Darstellung eines erfindungsgemäßen Verfahrens,
FIG 3 die Unterteilung eines Eingangssignals, das als Zeitreihe aufgetragen ist, in Fenster,
FIG 4 eine schematische Darstellung zur Auswahl von Merkmalen,
FIG 5 eine weitere schematische Darstellung zur Auswahl von Merkmalen,
FIG 6 eine Übersicht über schematische Darstellungen zur Auswahl von Merkmalen und
FIG 7 verschiedene Systemzustände zeitlich vor einem realen Systemzustand in einer Schemadarstellung.

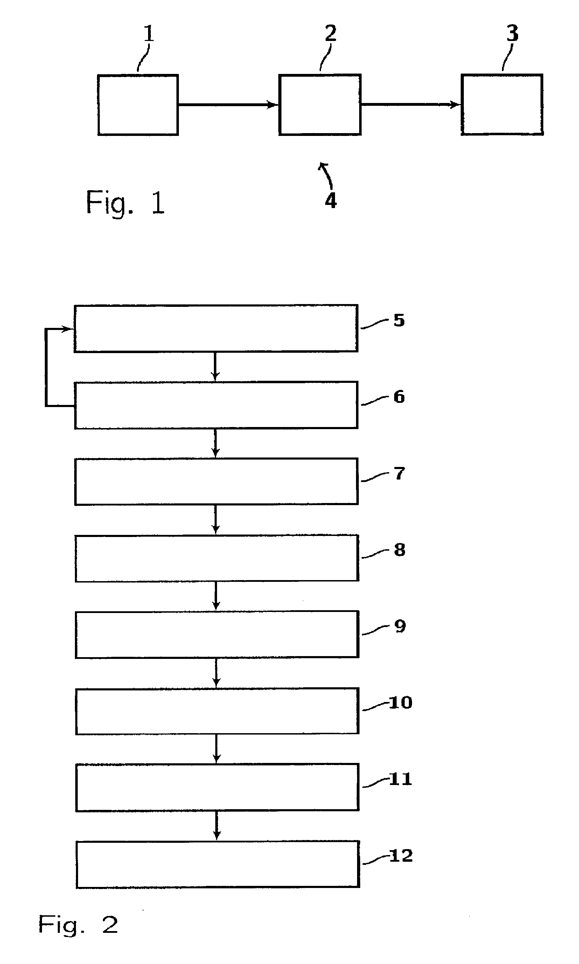

**FIG 1** zeigt eine schematische Darstellung einer erfindungsgemäßen Vorrichtung 4, umfassend eine Eingangseinheit 1, eine Verarbeitungseinheit 2 und eine Ausgangseinheit 3. Die Eingangseinheit 1 liefert ein oder mehrere digitalisierte Eingangssignale an die Verarbeitungseinheit 2 und je nach Betriebsmodus auch eine Berechnungsvorschrift zur Vorhersage von Systemzuständen. Die Eingangseinheit 1 besteht zur Lieferung der Eingangssignale beispielsweise aus Sensoren mit Analog/Digital-Wandlern oder sie liest bereits digitale Signale aus einer Datenbank, aus der sie je nach Betriebsmodus auch eine Berechnungsvorschrift zur Vorhersage von Systemzuständen einlesen kann.

Die Eingangssignalen bestehen üblicherweise aus Zeitreihen mit oder ohne Annotationen über den Zeitpunkt eines Systemzustandwechsels. Die Verarbeitungseinheit kann in zwei Betriebsmodi betrieben werden, entweder sie bestimmt anhand der Signale mit Annotationen eine Berechnungsvorschrift zur Vorhersage von Systemzuständen und gibt diese an die Ausgangseinheit 3 weiter oder sie stellt anhand der Signale und einer bereits vorhandenen Berechnungsvorschrift zur Vorhersage von Systemzuständen einen Systemzustand fest und gibt diesen an die Ausgangseinheit 3 weiter. Die Ausgangseinheit 3 nimmt die bestimmte Information über einen Systemzustandswechsel oder die bestimmte Berechnungsvcrschrift zur Vorhersage von Systemzuständen auf und zeigt diese an oder speichert diese beispielsweise in einer Datenbank oder auf einem Speichermedium.

Ein derartiges erfindungsgemäßes System kann beispielsweise anhand der Annotationen und Messdaten-Zeitreihen, die von Herzschrittmachern - jeder Schrittmacher ist dann eine Eingangseinheit 1 mit jeweils mehreren Eingangssignalen - vorliegen, in einem Servicecenter, das einer Verarbeitungseinheit 2 entspricht, eine Berechnungsvorschrift zur Vorhersage der kritischen Verschlechterung einer Krankheit und damit zur Vorhersage des Systemzustandswechsels von gesund auf krank ableiten. Diese Berechnungsvorschrift wird daraufhin von der Ausgangseinheit 3 gespeichert und es können mit dieser im zweiten Betriebsmodus des Systems die Verschlechterung einer Krankheit in neuen, bzw. anderen Messdaten von Herzschrittmachern gleicher oder anderer Patienten vorhergesagt werden und über die Ausgangseinheit 3 ausgegeben oder gespeichert werden. Diese Ausgabe kann beispielsweise einen Arzt alarmieren. Das erfindungsgemäße System funktioniert auch mit den Zeitreihen etwa eines einzigen Schrittmachers und mehreren Annotationen über Zustandswechsel. So kann anhand verschiedener Systemzustände eines Schrittmacher-Patienten eine Berechnungsvorschrift für diesen Patient erstellt werden und bei neuen Daten des gleichen Patienten eine Vorhersage getroffen werden.

Ebenso funktioniert das erfindungsgemäße System mit anderen Zeitreihen, etwa von Sonnenintensitätsmessungen und den zugehörigen Annotationen mit dem Zeitpunkt von Sonneneruptionen oder von Sensoren komplexer Industrieanlagen und Annotationen mit dem Zeitpunkt über Systemzustandswechsel oder von Verkehrsflussmessungen und den Zeitpunkten über das Aufkommen von Staus.

**FIG 2** zeigt eine schematische Darstellung eines erfindungsgemäßen Verfahrens in Form der Verfahrensschritte 5-12 der Verarbeitungseinheit 2 zur Ableitung oder Anwendung der Berechnungsvorschrift zur Vorhersage eines Systemzustandes.

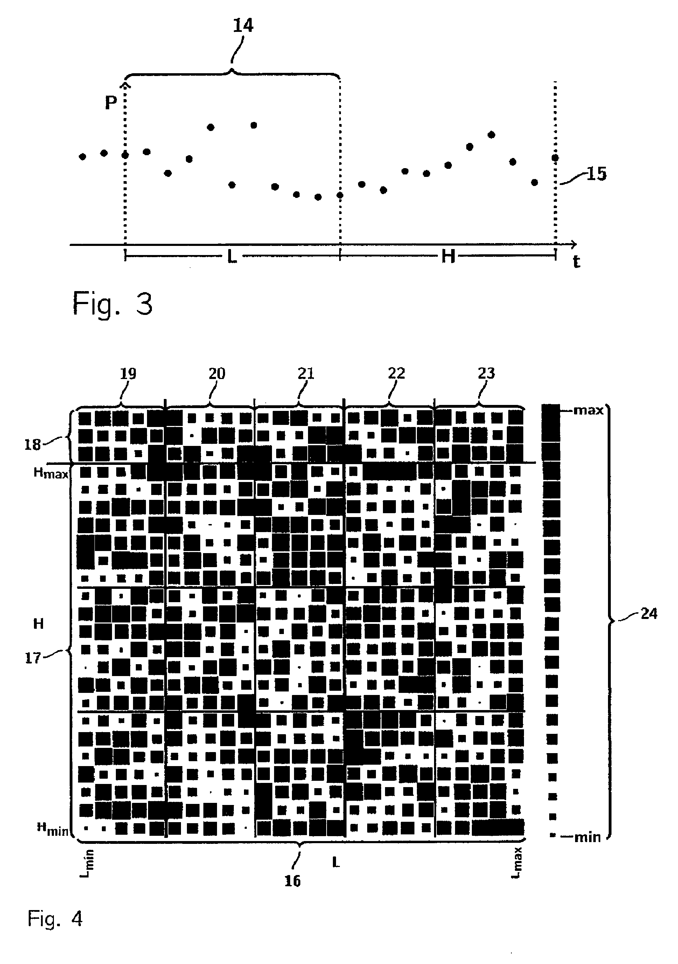

Bei der Einteilung 5 in Fenster werden die Eingangssignale in Fenster der L mit Abstand H zum Ende der Zeitreihe eingeteilt. Das Ende der Zeitreihe ist dabei entweder der Zeitpunkt eines Systemzustandswechsels oder ein vorgegebener Zeitpunkt mit bekanntem Systemzustand in der Zeitreihe im Falle der Ableitung der Berechnungsvorschrift oder ein anderer Zeitpunkt im Falle der Anwendung der Berechnungsvorschrift (siehe auch FIG 3). In Verfahrensschritt 6 wird die Einteilung 5 in Fenster für alle Längen L und alle Abstände H wiederholt, die sich aus der jeweiligen Zeitspanne der Zeitreihe und aus den vorgebbaren Abtastraten für die Längen L und Abstände H der Zeitfenster ergeben.

In Verfahrensschritt 7 wird ein Filterung aller Fenster vorgenommen, d.h. es werden beispielsweise fehlerhafte Messwerte in den Fenstern oder ganze Fenster mit zu wenigen Messdaten verworfen. In Verfahrensschritt 8 werden für alle verbliebenen Fenster ein oder mehrere charakteristische Merkmale berechnet, die etwa die Veränderung der Messdaten in diesem Fenster charakterisieren. Eine charakteristisches Merkmal ist beispielsweise der Gradient, der Mittelwert oder die Wahrscheinlichkeit eines Trends in einem Fenster.

Zusätzlich zu den Merkmalen aus Fenstern mit diskreten H- und L-Werten werden in Verfahrensschritt 9 die Fenster mehrerer sich überlappender Fenster mit einer ersten Funktion zusammengefasst, beispielsweise indem das Maximum, Minimum oder die Varianz berechnet werden. Somit sind für alle Eingangssignale aller Eingangseinheiten (z.3. verschiedene Herzschrittmacher) für die Fenster aller H,L-Kombinationen alle vorgegebenen charakteristischen Merkmale berechnet und zusätzlich verschiedene zusammengefasste Merkmale anhand einer vorgebbaren ersten Funktion angewandt auf charakteristische Merkmalen aus Fenstern, die sich überlappen oder nebeneinander liegen. In Verfahrensschritt 10 wird eine vorgebbare zweite Funktion, beispielsweise ein Score, berechnet, die es erlaubt, die charakteristischen und zusammengefassten Merkmale anhand ihrer Trennkraft auszuwählen. Ein solcher Score ist zum Beispiel der Fisher-Score in welchen die Merkmale zweier Zustände aus Fenstern gleicher Längen und Abstände des gleichen Eingangssignals unterschiedlicher Eingangseinheiten eingehen. Je nach Systemzustand können in einen solchen Score auch die Merkmale zweier Zustände aus Fenstern gleicher Länge und mehrerer Abstände des gleichen Eingangssignals unterschiedlicher Eingangseinheiten eingehen. Das macht den Score robuster und ist vor allem dann von Nutzen, wenn ein Systemzustand für längere Zeit vorliegt.

In Verfahrensschritt 11 werden anhand eines weiteren Filterkriteriums die Werte einer vorgebbaren zweiten Funktion aus Verfahrensschritt 10 gefiltert, um einen Satz von Merkmalen zu bestimmen. Ein Satz bestimmter Merkmale beinhaltet die Information darüber, welches Merkmal für welches Eingangssignal in welchen Fenstern zu berechnen ist und mit welcher ersten Funktion diese Merkmalswerte gegebenenfalls zusammenzufassen sind. Diese Information kann auch verwendet werden um Merkmalswerte im Abstand zu einem Systemzustandswechsel zu berechnen, indem beispielsweise die Verschiebung H entsprechend erhöht wird oder Merkmale mit einem zu geringen H verworfen werden. Selbiges kann auch angewandt werden, um Merkmalswerte weit vor einem Systemzustandswechsel zu berechnen und diese Merkmale dann einem anderen Systemzustand zuzuordnen. Auf diese Art können die Messwerte in der tiefen Vergangenheit eines kranken Patienten als zum gesunden Systemzustand gehörend eingehen und die Messwerte direkt mit etwas Abstand vor dem Systemzustandswechsel von gesund zu krank als zum kranken Systemzustand gehörend eingehen.

In Verfahrensschritt 12 wird ein Mustererkennungsverfahren, beispielsweise ein Support-Vector-Machines-Verfahren oder ein Verfahren, das auf Neuronalen Netzen basiert, zum Erhalt einer Berechnungsvorschrift zur Bestimmung eines Systemzustandes anhand des bestimmen Satzes von Merkmalswerten und den zugehörigen Systemzuständen trainiert. Im Falle der Anwendung der Berechnungsvorschrift werden in den Verfahrensschritten 5 bis 9 nur die Merkmale, die gemäß der Berechnungsvorschrift notwendig sind, berechnet und die bereits trainierte Berechnungsvorschrift angewendet und der bestimmte Systemzustand ausgegeben.

**FIG 3** zeigt die Unterteilung eines Eingangssignals P, das über die Zeit t als Zeitreihe aufgetragen ist, in Fenster. Dabei ist das Ende 15 der Zeitreihe entweder der Zeitpunkt eines bekannten Systemzustandswechsel oder ein vorgegebener Zeitpunkt mit bekanntem Systemzustand in der Zeitreihe im Falle der Ableitung einer Berechnungsvorschrift oder ein anderer Zeitpunkt im Falle der Anwendung der Berechnungsvorschrift.

Aus diesem Eingangssignal wird ein Fenster 14 der Länge L mit dem Abstand H zum Ende 15 der Zeitreihe ausgewählt. Diese Auswahl wird für alle Längen L und alle Abstände H wiederholt, die sich aus der jeweiligen Zeitspanne der Zeitreihe und aus den vorgebbaren Abtastraten für die Längen und Abstände der Zeitfenster ergeben. Die Abtastraten bedeuten eine Skalierung der Längen und Abstände beispielsweise linear in Tagen (L∈{4,5,6,7,8,9,10,...}, H∈{0,1,2,3,4,5,6,7,8,...}) oder auch exponentiell (L∈{4,8,16,32,64,...}, H∈{0,2,4,8,16,32,64,...}) oder gemischt (L∈{4,8,16,32,64, ...}, H∈{0,1,2,3, 4,5,6,7,8,...}.

**FIG 4** zeigt den erweiterten H-L-Plot mit Legende 24, der als Darstellung zur Auswahl 11 der Merkmale verwendet werden kann.

In den unteren Bereichen 16, 17 sind dabei die Werte einer vorgebbaren zweiten Funktion (entspricht einem Score) berechnet aus den charakteristischen Merkmalen diskreter H,L-Fenster und in den Bereichen 18 und 19 bis 23 die Werte einer vorgebbaren zweiten Funktion (entspricht einem Score) berechnet aus den zusammengefassten Merkmalen der vorgebbaren ersten Funktion eines Eingangssignals und einer Merkmalsfunktion dargestellt. Dadurch, dass sowohl die diskreten als auch die zusammengefassten Fenster in einem Plot gemeinsam auf der selben Skala dargestellt werden, ist es möglich automatisch oder manuell visuell zu erkennen, ob eher die diskreten oder zusammengefassten Fenster zu betrachten sind.

Mit Hilfe des Plots ist es nun möglich, zu analysieren, welche H-L-Bereiche die größte Trennkraft haben. Es kann so, statt vieler ähnlicher Merkmale in einem Bereich, etwa das Trennkraftmaximum dieses Bereiches ermittelt werden und das entsprechende Merkmal zur weiteren Verwendung ausgewählt werden.

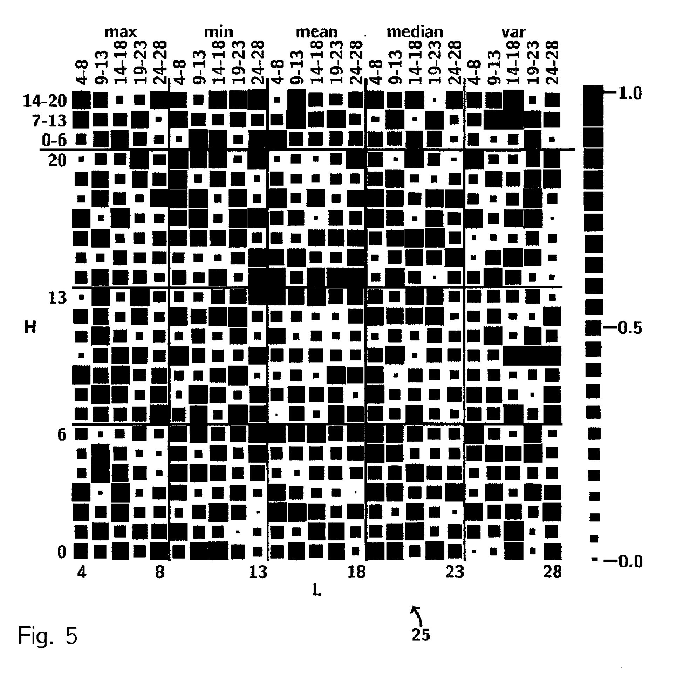

**FIG 5** zeigt als Beispiel einen anderen erweiterten H-L-Plot 25, in welchem konkrete Werte für die diskreten Längen L und Abstände H und konkrete vorgebbare erste Funktionen (Maximum, Minimum, ...) mit den zugehörigen verschiedenen zusammengefassten Längen und Abstände angegeben sind.

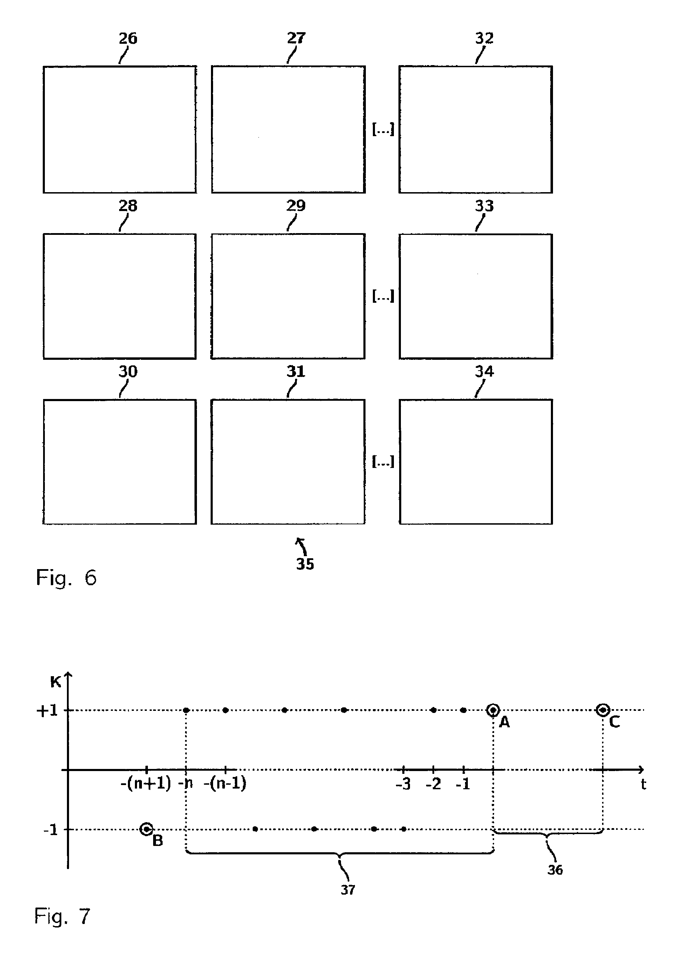

**FIG 6** zeigt eine erweiterte H-L-Plot Übersicht 35. Darin dargestellt sind die erweiterten H-L-Plots 25 aller Merkmalsfunktionen eines Eingangssignals, normiert auf das jeweilige Maximum 26, 27 und normiert auf 0.5 28, 29, zusammen mit dem relativen Fehler 30, 31 und der Anzahl 32, 33, 34 der jeweils eingehenden Datenmenge in einer Übersicht. In der äußersten Spalte rechts sind von oben nach unten die Anzahl 32 der Datensätze mit Systemzustandswechsel, die Anzahl 33 der Datensätze ohne Systemzustandswechsel summiert über alle Verschiebungen H, und die Anzahl 34 der Datensätze ohne Systemzustandswechsel pro H dargestellt.

In den Spalten links davon ist von oben nach unten jeweils einmal der H-L-Plot einer Merkmalsfunktion normiert auf das jeweilige Maximum 26, 27 und auf 0.5 28, 29, und der relative Fehler 30, 31 skaliert auf 1.0 dargestellt. Das sind bei sechs Merkmalsfunktionen insgesamt 21 Plots, die z.B. zur visuellen Auswahl zusammen auf einem 24-Zoll-Monitor mit allen Annotationen dargestellt, verglichen und analysiert werden können.

Die beiden Skalierungen der H-L-Plots ermöglichen es, sowohl die Struktur in den einzelnen Plots als auch die Strukturen im Vergleich zu betrachten. Es kann so analysiert werden, welche Merkmalsfunktion in welchem Fenster bzw. FensLerbereich geeigneter ist, um relevante Informationen aus den gegebenen Signalen zu extrahieren. Gleichzeitig kann dabei durch die Darstellung der Anzahl der Daten die Verfügbarkeit eines Merkmals und mit der Darstellung des relativen Fehlers die Zuverlässigkeit eines Merkmals beurteilt werden. Diese Übersicht erlaubt es, für eine Filterkombination die Trennkraft aller potentiellen Merkmale eines Eingangssignals auf einmal visuell zu erfassen und eine Auswahl der Merkmale für die weitere Verwendung nach bestimmten Kriterien zu treffen.

**FIG 7** zeigt Systemzustände K∈{-1,+1} über die Zeit t vor einem realen Systemzustand C (hier +1) aufgetragen. Das Bezugszeichen 36 bezeichnet dabei das Zeitfenster, vor dem der Systemzustand C spätestens bei A erkannt bzw. vorausgesagt werden soll.

In der Ausgestaltung in Form eines Herzschrittmachers entspricht dieses Fenster 36 einem therapeutischen Fenster, das die Zeitspanne angibt, in der noch auf ein bevorstehenden Systemzustandswechsel (von gesund auf krank) reagiert werden kann. Das Bezugszeichen 37 bezeichnet den Erkennungszeitraum an dessen Ende A liegt. Vor dem Erkennungszeitraum 37 liegt ein zweiter realer Systemzustand B (hier -1) vor. Die Koordinaten, die zuvor relativ zu einem vorgegebenen realen Systemzustand berechnet wurden, können auch zu anderen Zeitpunkten relativ dazu verschoben verwendet werden, beispielsweise durch Erhöhung des Fensterabstandes um die Länge des therapeutischen Fensters oder durch Weglassen von Merkmalen, die näher als die Länge des therapeutischen Fensters am realen Systemzustand liegen. Ebenso können die Messdaten eines Datensatzes vor dem Erkennungszeit als zu einem anderen Systemzustand gehörig verwendet werden, indem man die Merkmale bis dorthin verschiebt. Auf diese Weise kann ein Systemzustandswechsel und dessen Vorhersage abgebildet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Zusammenfassend betrifft die Erfindung ein Verfahren zur Aufnahme von Systemzuständen mit einer Vorrichtung, ein Verfahren zur Bestimmung mindestens eines Systemzustandes mit einer Vorrichtung, entsprechende Vorrichtungen, sowie Computerprogrammprodukte, die die Ausführung derartiger Verfahren ermöglichen. Dabei wird aus Zeitreihen von Eingangssignalen eines Systems eine Berechnungsvorschrift zur Bestimmung des Zustandes des Systems abgeleitet, sodass das System selbst überwacht und Änderungen des Zustandes des Systems zuverlässig angezeigt werden können.

## Patentansprüche

1. Verfahren zur Überwachung von Systemzuständen (K) (komplexer Systeme) für eine Bestimmung einer Änderung mindestens eines Systemzustandes mit einer Vorrichtung (4), umfassend die Schritte:
a) Unterteilung (5) von mindestens einer Zeitreihe von mindestens einem Eingangssignal in ein Zeitfenster (14) einer Länge L mit einem Abstand H zum Ende (15) der Zeitreihe, wobei das Eingangssignal über eine Eingangseinheit (1) der Vorrichtung (4) zugeführt wird,
b) Wiederholung (5) des Schrittes a) für alle Längen (L) und alle Abstände (H), die sich aus der jeweiligen Zeitspanne der Zeitreihe und aus vorgebbaren Abtastraten für die Längen (L) und Abstände (H) der Zeitfenster (14) ergeben,
c) Filterung (7) der nach Wiederholungsschritt b) erhaltenen Zeitfenster (14) anhand mindestens eines Filterkriteriums mittels der Verarbeitungseinheit (2) der Vorrichtung (4),
d) Berechnung (8) mindestens eines charakteristischen Merkmals für die gefilterten Zeitfenster (14) mittels der Verarbeitungseinheit (2) der Vorrichtung (4), wobei für jedes gefilterte Zeitfenster (14) das mindestens eine Merkmal berechnet wird,
e) Bestimmung (9) mindestens eines Funktionswertes einer vorgebbaren ersten Funktion, die die Werte des mindestens einen charakteristischen Merkmals für gefilterte Zeitfenster (14) verschiedener Längen (L) und Abstände (H) für das mindestens eine Eingangssignal zusammenfasst mittels der Verarbeitungseinheit (2) der Vorrichtung (4),
f) Bestimmung (10) mindestens eines Funkticnswertes einer vorgebbaren zweiten Funktion für alle Zeitfenster (14) aus Verfahrensschritt b), die aus dem mindestens einem Funktionswert der ersten Funktion eine Größe, die zwischen den Systemzuständen unterscheidet, bestimmt mittels der Verarbeitungseinheit (2) der Vorrichtung (4),
g) Filterung (11) des mindestens einen Funktionswertes der vorgebbaren zweiten Funktion anhand eines weiteren Filterkriteriums zur Bestimmung eines Satzes von Funktionswerten der vorgebbaren ersten Funktion mittels der Verarbeitungseinheit (2) der Vorrichtung (4),
h) Training (12) eines Mustererkennungverfahrens zum Erhalt einer Berechnungsvorschrift zur Bestimmung eines Systemzustandes (K) mittels der Verarbeitungseinheit (2) der Vorrichtung (4) anhand des aus Schritt g) bestimmten Satzes von Funktionswerten der vorgebbaren ersten Funktion und den dazugehörigen Systemzuständen.

2. Verfahren zur Bestimmung einer Änderung mindestens eines Systemzustandes (K) mit einer Vorrichtung (4), umfassend die Schritte:
a) Unterteilung (5) von mindestens einer Zeitreihe von mindestens einem Eingangssignal in ein Zeitfenster (14) einer Länge L mit einem Abstand H zum Ende (15) der Zeitreihe, wobei das Eingangssignal über eine Eingangseinheit (1) der Vorrichtung (4) zugeführt wird,
b) Filterung (7) der Zeitfenster (14) anhand mindestens eines Filterkriteriums mittels der Verarbeitungseinheit (2) der Vorrichtung (4),
c) Berechnung (8) mindestens eines charakteristischen Merkmals für die gefilterten Zeitfenster (14) mittels der Verarbeitungseinheit (2) der Vorrichtung (4), wobei für jedes gefilterte Zeitfenster (14) das mindestens eine Merkmal berechnet wird,
d) Wiederholung der Schritte a) bis c) mittels der Verarbeitungseinheit (2) der Vorrichtung (4), bis alle für die Berechnungsvorschrift nach Anspruch 1 notwendigen, sich aus dem verwendeten Mustererkennungsverfahren ergebenden, Eingangsgrößen bestimmt sind und
e) Bestimmung mindestens eines Systemzustandes mittels der Verarbeitungseinheit (2) der Vorrichtung (4) anhand der Berechnungsvorschrift zur Bestimmung eines Systemzustandes (K) mittels eines Verfahrens zur Aufnahme von Systemzuständen (K) mit einer Vorrichtung (4) nach Anspruch 1.

3. Verfahren nach einem der Ansprüche 1 oder 2, wobei bei Lücken für fehlende Werte im Verfahrensschritt f), Mittelwerte oder nach einer anderen Berechnungsvorschrift berechnete Werte in die vorgebbare zweite Funktion eingehen.

4. Verfahren nach einem der Ansprüche 1 bis 3, wobei die Filterung (11) im Verfahrensschritt g) durch eine manuelle Benutzereingabe erfolgt.

5. Verfahren nach einem der Ansprüche 1 bis 4, wobei neben den Funktionswerten der vorgebbaren zweiten Funktion im Verfahrensschritt g) auch die Werte (L, H) der zugrunde liegenden Daten in das weitere Filterkriterium mit einfließen.

6. Verfahren nach einem der Ansprüche 1 bis 5, wobei in Verfahrensschritt h) der in Verfahrensschritt g) bestimmte Satz von Funktionswerten auf einer Zeitskala verschoben zum gleichen oder einem anderen Systemzustand (K) gehörend verwendet wird.

7. Vorrichtung (4) zur Überwachung von Systemzuständen (K) für eine Bestimmung einer Änderung mindestens eines Systemzustandes, umfassend
- mindestens eine Eingangseinheit (1) zur Zuführung mindestens eines Eingangssignals, umfassend eine Zeitreihe von Messwerten und/oder Messzeitpunkten eines signalproduzierenden Systems, eine sich daraus ergebende Zeitspanne und einen dazugehörigen Systemzustand,
- eine Verarbeitungseinheit (2) zur Verarbeitung des mindestens einen Eingangssignals und
- eine Ausgangseinheit (3) zur Ausgabe und/oder zur Speicherung einer Berechnungsvorschrift zur Vorhersage des Systemzustandes des signalproduzierenden Systems,
wobei die Verarbeitungseinheit (2) zur Ausführung folgender Schritte ausgestaltet ist:
a) Unterteilung (5) der mindestens einen Zeitreihe des mindestens einen Eingangssignals in ein Zeitfenster (14) einer Länge L mit einem Abstand H zum Ende (15) der Zeitreihe,
b) Wiederholung (6) des Schrittes a) für alle Längen (L) und alle Abstände (H), die sich aus der jeweiligen Zeitspanne der Zeitreihe und aus vorgebbaren Abtastraten für die Längen (L) und Abstände (H) der Zeitfenster (14) ergeben,
c) Filterung (7) der nach Wiederholungsschritt b) erhaltenen Zeitfenster (14) anhand mindestens eines Filterkriteriums,
d) Berechnung (8) mindestens eines charakteristischen Merkmals für die gefilterten Zeitfenster (14), wobei für jedes gefilterte Zeitfenster (14) das mindestens eine Merkmal berechnet wird,
e) Bestimmung (9) mindestens eines Funktionswertes einer vorgebbaren ersten Funktion, die die Werte des mindestens einen charakteristischen Merkmals für gefilterte Zeitfenster (14) verschiedener Längen (L) und Abstände (H) für das mindestens eine Eingangssignal zusammenfasst,
f) Bestimmung (10) mindestens eines Funktionswertes einer vorgebbaren zweiten Funktion für alle Zeitfenster (14) aus Verfahrensschritt b), die aus dem mindestens einem Funktionswert der ersten Funktion eine Größe, die zwischen den Systemzuständen unterscheidet, bestimmt,
g) Filterung (11) des mindestens einen Funktionswertes der vorgebbaren zweiten Funktion anhand eines weiteren Filterkriteriums zur Bestimmung eines Satzes von Funktionswerten der vorgebbaren ersten Funktion,
h) Training (12) eines Mustererkennungverfahrens zum Erhalt einer Berechnungsvorschrift zur Bestimmung eines Systemzustandes (K) anhand des aus Schritt g) bestimmten Satzes von Funktionswerten der vorgebbaren ersten Funktion und den dazugehörigen Systemzuständen.

8. Vorrichtung (4) zur Bestimmung einer Änderung mindestens eines Systemzustandes (K), umfassend
- mindestens eine Eingangseinheit (1) zur Zuführung mindestens eines Eingangssignals, umfassend eine Zeitreihe von Messwerten und/oder Messzeitpunkten des signalproduzierenden Systems, eine sich daraus ergebende Zeitspanne,
- eine Verarbeitungseinheit (2) zur Bestimmung des Systemzustandes und
- eine Ausgangseinheit (3) zur Ausgabe und/oder zur Speicherung des Systemzustandes,
wobei die Verarbeitungseinheit (2) zur Ausführung folgender Schritte ausgestaltet ist:
a) Unterteilung (5) der mindestens einen Zeitreihe des mindestens einen Eingangssignals in ein Zeitfenster (14) einer Länge L mit einem Abstand H zum Ende (15) der Zeitreihe,
b) Filterung (7) der Zeitfenster (14) anhand mindestens eines Filterkriteriums,
c) Berechnung (8) mindestens eines charakteristischen Merkmals für die gefilterten Zeitfenster (14), wobei für jedes gefilterte Zeitfenster (14)das mindestens eine Merkmal berechnet wird,
d) Wiederholung der Schritte a) bis c) bis alle für die Berechnungsvcrschrift nach Anspruch 7 notwendigen, sich aus dem verwendeten Mustererkennungsverfahren ergebenden, Eingangsgrößen bestimmt sind und
e) Bestimmung mindestens eines Systemzustandes anhand der Berechnungsvorschrift zur Bestimmung eines Systemzustandes (K) mittels einer Vorrichtung (4) zur Speicherung und Verarbeitung von Eingangssignalen eines signalproduzierenden Systems nach Anspruch 7.

9. Vorrichtung (4) nach einem der Ansprüche 7 oder 8, wobei die Eingangseinheit (1), die Verarbeitungseinheit (2) und die Ausgangseinheit (3) derart ausgestaltet sind, ein Verfahren nach einem der Ansprüche 1 bis 6 durchzuführen.

10. Anordnung bestehend aus einer Vorrichtung (4) nach Anspruch 7 und einer Vorrichtung (4) nach Anspruch 8.

11. Vorrichtung nach einem der Ansprüche 7 bis 10, wobei ein System ein Herz-Kreislauf-System und/oder ein Sonnensystem und/oder ein Verkehrssystem und/oder ein Ökosystem und/oder ein Klimasystem und/oder ein Energieversorgungssystem und/oder Energieerzeugungssystem und/oder ein Leitsystem und/oder ein Infrastruktursystem umfasst.

12. Vorrichtung nach einem der Ansprüche 7 bis 11, wobei ein Systemzustand einen Zustand eines Patienten und/oder eine Aktivität der Sonne und/oder ein Stauaufkommen und/cder ein Ökosystemzustand und/oder ein Klimazustand und/oder ein Energieversorgungssystemzustand und/oder ein Energieerzeugungssystemzustand und/oder ein Leitsystemzustand und/oder ein Infrastruktursystemzustand umfasst.

13. Computerprogrammprodukt, welches ein Programm umfasst und direkt in einen Speicher einer programmierbaren Steuereinrichtung einer Vorrichtung (4) ladbar ist, mit Programm-Mitteln, um alle Schritte des Verfahrens nach einem der Ansprüche 1 bis 6 auszuführen, wenn das Programm in der Steuereinrichtung der Vorrichtung (4) ausgeführt wird.

14. Elektronisch lesbarer Datenträger nit darauf gespeicherten elektronisch lesbaren Steuerinformationen, welche derart ausgestaltet sind, dass sie bei Verwendung des Datenträgers in einer Steuereinrichtung einer Vorrichtung (4) das Verfahren nach einem der Ansprüche 1 bis 6 ausführen.
